# EUROPÄISCHE PATENTSCHRIFT

(11) **EP 3 586 261 B1**
(45) Veröffentlichungstag und Bekanntmachung des Hinweises auf die Patenterteilung: **04.08.2021**
(21) Anmeldenummer: 18702218.1
(22) Anmeldetag: 25.01.2018
(51) Int. Cl.: G06F 21/62

(54) **VERFAHREN ZUM GESICHERTEN ZUGRIFF AUF DATEN**
METHOD FOR SECURE ACCESS TO DATA
PROCÉDÉ D'ACCÈS SÉCURISÉ À DES DONNÉES

(30) Priorität: 21.02.2017 DE 102017103519
(43) Veröffentlichungstag der Anmeldung: 01.01.2020
(73) Patentinhaber: Uniscon universal identity control GmbH, 80339 München (DE)
(72) Erfinder: JÄGER, Hubert, 82049 Pullach (DE); PERLE, Hans-Christian, 65193 Wiesbaden (DE); RIEKEN, Ralf, 80995 München (DE)
(74) Vertreter: 2s-ip Schramm Schneider Bertagnoll Patent- und Rechtsanwälte Part mbB
(86) Internationale Anmeldenummer: PCT/EP2018/051900
(87) Internationale Veröffentlichungsnummer: WO 2018/153610

(56) Entgegenhaltungen:
- US-B1- 8 812 875
- Nilotpal Chakraborty ET AL: "Functional Encryption for Secured Big Data Analytics", International Journal of Computer Applications, 18. Dezember 2014 (2014-12-18), Seiten 19-22, XP055455727, DOI: 10.5120/18836-0359 Gefunden im Internet: URL:https://pdfs.semanticscholar.org/4be6/ 96937454e64f7f75d2640dc7af594dbaa3a1.pdf [gefunden am 2018-03-01]
- ARIEL HAMLIN ET AL: "Cryptography for Big Data Security", INTERNATIONAL ASSOCIATION FOR CRYPTOLOGIC RESEARCH,, Bd. 20160106:210558, 6. Januar 2016 (2016-01-06), Seiten 1-50, XP061019977, [gefunden am 2016-01-06]

## Beschreibung

### Gebiet der Erfindung

Die Erfindung betrifft ein Verfahren und ein System zum gesicherten Zugriff auf Daten. Insbesondere betrifft die Erfindung ein Verfahren und ein System zum weiteren gesicherten Zugriff auf Daten, nachdem sich die Zugriffsrichtlinien für den Zugriff auf dieses Daten geändert haben.

### Hintergrund der Erfindung

In Unternehmen werden immer mehr Daten von Kunden (oder anderen natürlichen oder juristischen Personen) gespeichert. Im Stand der Technik bekannt ist es hierbei, diese Kundendaten zu verschlüsseln. Allerdings werden solche Kundendaten zunehmend nicht mehr nur von dem die Daten erhebenden Unternehmen selbst ausgewertet, etwa im Rahmen einer Big Data Analyse, sondern auch von Dritten.

Um eine datenschutzkonforme Auswertung zu ermöglichen, ist es bekannt die Daten zu anonymisieren. Solche Auswertungen, sei es durch das die Daten erhebende Unternehmen, sei es durch Dritte, können bzw. sollten allerdings nur mit Zustimmung des Kunden möglich sein. Der Kunde kann hierbei dem die Daten erhebenden Unternehmen die explizite Zustimmung für eine bestimmte Art von Auswertung erteilen. Bekannt ist es hierbei, dass die Daten nur mit einem Entschlüsselungsschlüssel des jeweiligen Kunden entschlüsselt werden können, um sie anschließend auszuwerten. Diese Entschlüsselungsschlüssel müssen allerdings dem die Daten erhebenden Unternehmen zur Verfügung stellen, damit eine praktikable Auswertung überhaupt möglich ist. Eine Entschlüsselung der Daten durch den Kunden zum Zeitpunkt der Auswertung ist aus rein logistischen Gründen nicht möglich. Nachteilig hierbei ist allerdings, dass das Unternehmen die Daten trotz der expliziten Zustimmung des Kunden für lediglich eine bestimmte Art von Auswertung auch für andere Zwecke auswerten kann, da das Unternehmen ja im Besitz der Entschlüsselungsschlüssel ist. Damit könnten Daten auch ohne Einverständnis des Kunden auf eine andere Art ausgewertet werden. US8812875-B1 stellt ein relevantes Dokument des Standes der Technik dar.

### Aufgabe der Erfindung

Aufgabe der vorliegenden Erfindung ist es daher, die aus dem Stand der Technik bekannten Nachteile zu vermeiden, insbesondere Lösungen bereitzustellen, die es ermöglichen, dass auch Auswertungen für andere Zwecke nur unter der Kontrolle des Kunden bzw. der Eigentümer der Daten möglich ist.

### Erfindungsgemäße Lösung

Erfindungsgemäß wird diese Aufgabe mit einem Verfahren und einem System nach den unabhängigen Ansprüchen gelöst. Vorteilhafte Ausgestaltungen und Weiterbildungen der Erfindung sind in den jeweiligen abhängigen Ansprüchen angegeben. Dabei gelten Merkmale und Details, die im Zusammenhang mit dem erfindungsgemäßen Verfahren beschrieben sind, auch im Zusammenhang mit dem erfindungsgemäßen System und umgekehrt, sodass bezüglich der Offenbarung zu den einzelnen Erfindungsaspekten stets wechselseitig Bezug genommen werden kann.

Bereitgestellt wird demnach ein Verfahren zum gesicherten Zugriff auf Daten, wobei
- die Daten eine Anzahl von Datensätzen umfassen, wobei
   - die Datensätze jeweils einer Instanz, vorzugweise einem Benutzer zugeordnet werden, und
   - die Datensätze verschlüsselt in einer Datenbank gespeichert werden, wobei zum Entschlüsseln der der jeweiligen Instanz zugeordneten Datensätze ein der jeweiligen Instanz zugeordneter erster Entschlüsselungsschlüssel verwendet wird,
- die ersten Entschlüsselungsschlüssel ausschließlich in einem volatilen Speicher gespeichert werden,
- die der jeweiligen Instanz zugeordneten ersten Entschlüsselungsschlüssel mit einem der jeweiligen Instanz zugeordneten Verschlüsselungsschlüssel verschlüsselt werden und die verschlüsselten ersten Entschlüsselungsschlüssel in einem permanenten Speicher gespeichert werden, und
- nach einem Löschen des volatilen Speichers
   - die verschlüsselten ersten Entschlüsselungsschlüssel von dem permanenten Speicher in den volatilen Speicher kopiert werden, und
   - in dem volatilen Speicher die ersten Entschlüsselungsschlüssel mit einem der jeweiligen Instanz zugeordneten zweiten Entschlüsselungsschlüssel entschlüsselt werden.

Damit können in vorteilhafter Weise die unverschlüsselten ersten Entschlüsselungsschlüssel, die zum Entschlüsseln der Daten vorgesehen sind, etwa bei einer Änderung des Zweckes der Datenauswertung gelöscht bzw. vernichtet werden. Gleichzeitig ist aber durch das Verschlüsseln der ersten Entschlüsselungsschlüssel und durch das Speichern der verschlüsselten ersten Entschlüsselungsschlüssel gewährleistet, dass die ersten Entschlüsselungsschlüssel nach einer Zustimmung des Eigentümers der Daten wieder hergestellt werden können. Für eine Big Data Analyse von besonderem Vorteil ist hierbei, dass nicht nur zukünftig erhobene Daten gemäß dem neuen Zwecke ausgewertet werden können, sondern auch die bereits vor der Änderung des Zweckes der Datenauswertung erhobenen Daten. Vorteilhaft ist es hierbei, wenn die Verschlüsselungsschlüssel zum Verschlüsseln der ersten Entschlüsselungsschlüssel und die zweiten Entschlüsselungsschlüssel zum Entschlüsseln der verschlüsselten ersten Entschlüsselungsschlüssel mit einem Geheimnis erzeugt werden, das von der jeweiligen Instanz bereitgestellt wird, wobei das Geheimnis von der jeweiligen Instanz separat für das Erzeugen der Verschlüsselungsschlüssel und für das Erzeugen der zweiten Entschlüsselungsschlüssel bereitgestellt wird. Das heißt, dass das Geheimnis einmal für das Erzeugen der Verschlüsselungsschlüssel und getrennt hiervon einmal für das Erzeugen der zweiten Entschlüsselungsschlüssel bereitgestellt wird.

Durch das Bereitstellen des Geheimnisses für das Erzeugen der zweiten Entschlüsselungsschlüssel kann die jeweilige Instanz, etwa ein Kunde, sein Einverständnis für das Entschlüsseln der Daten und für die Auswertung der Daten gemäß dem neuen Zweck geben.

Es hat sich als vorteilhaft herausgestellt, wenn das Geheimnis jeweils nach dem Erzeugen der Verschlüsselungsschlüssel und nach dem Erzeugen der zweiten Entschlüsselungsschlüssel verworfen bzw. gelöscht wird. Damit ist sichergestellt, dass die verschlüsselten ersten Entschlüsselungsschlüssel nicht ohne Einverständnis der jeweiligen Instanz wieder hergestellt werden können.

Die Verschlüsselungsschlüssel können nach dem Verschlüsseln der ersten Entschlüsselungsschlüssel gelöscht oder ausschließlich in dem volatilen Speicher gespeichert werden.

Die zweiten Entschlüsselungsschlüssel können nach dem Entschlüsseln der verschlüsselten ersten Entschlüsselungsschlüssel gelöscht oder ausschließlich in dem volatilen Speicher gespeichert werden.

Vorteilhafter Weise wird der Zugriff auf die in der Datenbank verschlüsselten Datensätze über eine Zugriffskontrolleinrichtung abgewickelt, wobei in der Zugriffskontrolleinrichtung Zugriffsrichtlinien hinterlegt sind, die angeben, wer zu welchem Zweck auf die verschlüsselten Datensätze zugreifen kann.

Als besonders vorteilhaft hat sich hierbei herausgestellt, wenn bei einer Änderung der Zugriffsrichtlinien der gesamte Inhalt des volatilen Speichers gelöscht wird. Dadurch ist gewährleistet, dass auf die in der Datenbank verschlüsselt gespeicherten Datensätze nicht ohne Einwilligung der jeweiligen Instanz zugegriffen werden kann. Denn ein Zugriff ist erst nach dem Wiederherstellen der ersten Entschlüsselungsschlüssel möglich, was das Einverständnis der jeweiligen Instanz voraussetzt. Dieses Einverständnis gibt die jeweilige Instanz durch das Bereitstellen des Geheimnisses, nachdem der volatile Speicher gelöscht wurde.

Werden die Verschlüsselungsschlüssel und/oder die zweiten Entschlüsselungsschlüssel ausschließlich im volatilen Speicher gespeichert, ist damit auch sichergestellt, dass diese etwa bei einer Änderung des Zweckes der Datenauswertung zusammen mit den ersten Entschlüsselungsschlüssel gelöscht bzw. vernichtet werden.

Besonders vorteilhaft ist es, wenn die Zugriffskontrolleinrichtung physikalisch mit dem volatilen Speicher gekoppelt (d.h. fest verdrahtet) ist, wobei bei einer Änderung der Zugriffsrichtlinien die Zugriffskontrolleinrichtung neu gestartet wird und aufgrund der physikalischen Kopplung auch der volatile Speicher neu gestartet wird. Das Neustarten der Zugriffskontrolleinrichtung bewirkt also, dass auch der volatile Speicher neu gestartet wird. Beim Neustarten des volatilen Speichers wird der gesamte Inhalt des volatilen Speichers gelöscht, d.h. alle in dem volatilen Speicher gespeicherten Schlüssel werden gelöscht bzw. vernichtet. Zudem werden beim Neustarten des volatilen Speichers auch alle gegebenenfalls vorhandenen Sicherungskopien des volatilen Speichers gelöscht. Vorteilhafter Weise ist es vorgesehen, dass beim Neustart des volatilen Speichers keine Sicherungskopien (z.B. Dumps) des volatilen Speichers erzeugt werden.

Vorteilhaft ist es, wenn die Datenbank, der volatile Speicher, der permanente Speicher und die Zugriffskontrolleinrichtung Teil einer gesicherten Umgebung sind. Die gesicherte Umgebung gewährleistet, dass weder der Betreiber der Infrastruktur noch ein sonstiger Dritter auf die Daten zugreifen kann. Der Zugriff auf die Daten ist nur über spezielle Schnittstellen möglich. Vorteilhaft ist hierbei, wenn auch die Auswertung der Daten (Big Data Analyse) in der gesicherten Umgebung durchgeführt wird und lediglich die Ergebnisse der Auswertung nach außen gegeben werden bzw. die gesicherte Umgebung verlassen.

Bereit gestellt wird durch die Erfindung ferner ein System, das angepasst ist, dass erfindungsgemäße Verfahren auszuführen.

### Kurzbeschreibung der Figuren

Einzelheiten und Merkmale der Erfindung sowie konkrete Ausführungsbeispiele der Erfindung ergeben sich aus der nachfolgenden Beschreibung in Verbindung mit der Zeichnung, wobei die Erfindung nicht auf die nachfolgend beschriebenen Ausführungsbeispiele beschränkt ist. Es zeigt:
- Fig. 1: ein Beispiel eines erfindungsgemäßen Systems zum gesicherten Zugriff auf Daten; und
- Fig. 2: ein Ablaufdiagramm für ein erfindungsgemäßes Verfahren zum gesicherten Zugriff auf Daten.

### Detaillierte Beschreibung der Erfindung

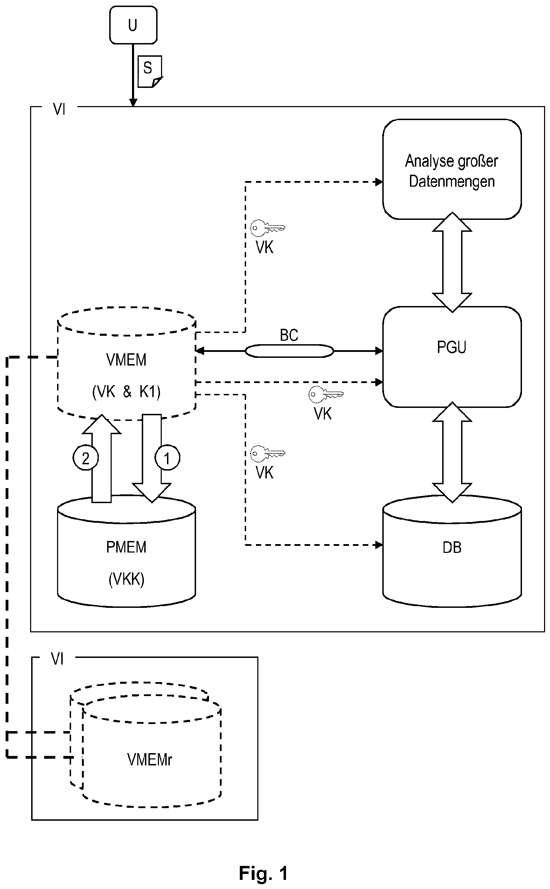

**Fig. 1** zeigt ein Beispiel eines erfindungsgemäßen Systems bzw. einer erfindungsgemäßen Architektur.

In einer Datenbank DB sind Daten einer Instanz U gespeichert. Die Instanz U kann beispielsweise ein Kunde eines Unternehmens, ein Benutzer eines Systems oder eine sonstige natürliche oder juristische Person sein. Die Instanz U stellt Daten bereit, die in der Datenbank DB gespeichert werden. Die Daten der Instanz U können auf verschiedene Art und Weise erhoben werden. Beispielsweise können die Daten von einem der Instanz U zugeordneten Endgerät übermittelt werden. Das Endgerät kann etwa ein Mobiltelefon oder aber auch ein Fahrzeug sein. Im Falle eines Fahrzeuges, können Fahrzeugdaten erfasst und in der Datenbank gespeichert werden. Die Fahrzeugdaten können hierbei Fahrtrouten, Fahrstil (passiv/aggressiv), Fahrtzeiten, etc. aber auch Fahrbahnschäden, Beschilderungen, Hindernisse etc. umfassen. So können beispielsweise von einem Sensor erfasste Beschilderungen mit in Kartendaten hinterlegte Beschilderungen abgeglichen werden, um etwa fehlerhafte Kartendaten zu korrigieren. Diese und weitere Fahrzeugdaten können genutzt werden, um eine langfristige Erforschung von Mobilitätsdaten zu ermöglichen.

Der Zugriff auf die in der Datenbank DB gespeicherten nutzerbezogenen Daten soll erfindungsgemäß nur dann möglich sein, wenn der jeweilige Nutzer der entsprechenden Verwendung der Daten zugestimmt hat.

In dem nachfolgenden Beispiel wird von einer ersten Verwendung und von einer zweiten Verwendung der Daten ausgegangen, wobei die zweite Verwendung der Daten verschieden von der ersten Verwendung der Daten ist. Die erste Verwendung kann etwa eine bestimmte erste Auswertung der Daten und die zweite Verwendung kann eine bestimmte zweite Auswertung derselben Daten sein. Generell ist die Erfindung aber nicht auf zwei Verwendungen beschränkt, sondern kann analog auch auf n Verwendungen übertragen werden.

Die Daten werden verschlüsselt in der Datenbank DB gespeichert. Sobald von einer Instanz U erstmalig Daten erfasst werden, muss die Instanz der ersten Verwendung zustimmen. Die Zustimmung der Instanz U kann in einer Ausgestaltung der Erfindung vor dem erstmaligen Erfassen der Daten erfolgen. Die Zustimmung zur ersten Verwendung impliziert, dass für das Entschlüsseln der in der Datenbank gespeicherten Daten entsprechende erste Entschlüsselungsschlüssel VK erzeugt werden. Diese ersten Entschlüsselungsschlüssel VK werden erfindungsgemäß in einem volatilen Speicher VMEM gespeichert. Vorzugsweise sind jeder Instanz U andere erste Entschlüsselungsschlüssel VK zugeordnet.

Für den Zugriff auf die in der Datenbank DB gespeicherten Daten, werden die entsprechenden ersten Entschlüsselungsschlüssel VK aus dem volatilen Speicher VMEM ausgelesen und der auf die Datenbank zugreifenden Einheit übergeben. Diese zugreifende Einheit kann bei dem in Fig. 1 gezeigten System die Einheit sein, die die Auswertung durchführt (Big Data Analysis), oder die Zugriffskontrolleinrichtung PGU, die den Zugriff auf die Daten in der Datenbank DB überwacht. Alternativ kann der erste Entschlüsselungsschlüssel VK auch der Datenbank DB zur Verfügung gestellt werden, die dann intern beim Zugriff auf die Daten dieses entschlüsselt.

Gleichzeitig (oder zeitnah) mit dem Erzeugen der ersten Entschlüsselungsschlüssel VK werden diese verschlüsselt. Zum Verschlüsseln der ersten Entschlüsselungsschlüssel VK wird ein Verschlüsselungsschlüssel K1 benötigt. Die Verschlüsselungsschlüssel K1, die jeweils einer Instanz zugeordnet sind, werden basierend auf einem Geheimnis S erzeugt. Jede Instanz U stellt hierbei dem System ein entsprechendes Geheimnis S zur Verfügung. Das Geheimnis S kann ein Passwort, Passphrase, ein Token oder eine sonstige geheime und nur der Instanz U bekannte Information sein.

Als Ergebnis liegen die ersten Entschlüsselungsschlüssel VK dann in einer entschlüsselten Form (VK) und in einer verschlüsselten Form VKK vor. Die verschlüsselten ersten Entschlüsselungsschlüssel VKK werden dann in einem permanenten Speicher PMEM gespeichert, wie in Fig. 1 durch den Pfeil 1 verdeutlicht. Das Geheimnis S wird nach dem Erzeugen der Verschlüsselungsschlüssel K1 gelöscht bzw. verworfen.

Das System bzw. die jeweilige auf die Datenbank DB zugreifende Einheit kann nun gemäß der ersten Verwendung die Daten aus der Datenbank DB lesen und unter Verwendung des ersten Entschlüsselungsschlüssels VK entschlüsseln.

Auf die in der Datenbank DB gespeicherten Daten soll nun gemäß der zweiten Verwendung zugegriffen werden. Die Instanzen U haben bisher allerdings erst der ersten Verwendung zugestimmt.

Um nun zu erreichen, dass die Instanzen U, oder zumindest einige der Instanzen U, der zweiten Verwendung explizit zustimmen, ist es nunmehr erfindungsgemäß vorgesehen, dass die in dem volatilen Speicher VMEM gespeicherten ersten Entschlüsselungsschlüssel VK gelöscht bzw. vernichtet werden. Dies kann dadurch erreicht werden, dass der volatile Speicher VMEM gelöscht wird, etwa indem die Energieversorgung des volatilen Speichers für einen bestimmten Zeitraum (z.B. 5 Sekunden) unterbrochen wird. Damit wird auch der Verschlüsselungsschlüssel K1 gelöscht. Zu diesem Zeitpunkt weist das System nun einen Zustand auf, bei dem die in der Datenbank DB gespeicherten Daten zwar ausgelesen aber nicht mehr entschlüsselt werden können. Denn die in entschlüsselter Form in dem volatilen Speicher VMEM gespeicherten ersten Entschlüsselungsschlüssel VK wurden ja gelöscht.

Sollten in den auf die Datenbank DB zugreifenden Einheiten erste Entschlüsselungsschlüssel VK gespeichert oder zwischengespeichert sein, werden auch diese ersten Entschlüsselungsschlüssel VK gelöscht bzw. vernichtet.

Beispielsweise kann es aus Gründen der Performance vorgesehen sein, dass ein der Zugriffskontrolleinrichtung PGU bereitgestellter erster Entschlüsselungsschlüssel VK in der Zugriffskontrolleinrichtung gespeichert wird, damit dieses Schlüssel nicht jedes mal neu von dem volatilen Speicher VMEM angefordert werden muss. In diesem Fall würde auch der in der Zugriffskontrolleinrichtung gespeicherte erste Entschlüsselungsschlüssel VK gelöscht bzw. vernichtet.

Erfindungsgemäß ist es nun vorgesehen, die verschlüsselten ersten Entschlüsselungsschlüssel VKK aus dem permanenten Speicher PMEM auszulesen und in den volatilen Speicher VMEM zu schreiben, wie in Fig. 1 mit dem Pfeil 2 gezeigt. Damit die verschlüsselten ersten Entschlüsselungsschlüssel VKK entschlüsselt werden können, muss die jeweilige Instanz U dem System das Geheimnis S erneut zur Verfügung stellen. Das erneute zur Verfügung stellen des Geheimnisses S kann als Einwilligung der jeweiligen Instanz U für die zweite Verwendung der Daten angesehen werden.

Aus dem erneut zur Verfügung gestellten Geheimnis S wird in dem System dann ein zweiter Entschlüsselungsschlüssel K2 erzeugt, mit dem die verschlüsselten ersten Entschlüsselungsschlüssel VKK entschlüsselt werden. Das Entschlüsseln der verschlüsselten ersten Entschlüsselungsschlüssel VKK erfolgt vorzugsweise in dem volatilen Speichern VMEM. Nach dem Entschlüsseln der verschlüsselten ersten Entschlüsselungsschlüssel VKK können die verschlüsselten ersten Entschlüsselungsschlüssel VKK in dem volatilen Speicher gelöscht werden, sodass in dem volatilen Speicher nur mehr die entschlüsselten ersten Entschlüsselungsschlüssel VK gespeichert sind. Die verschlüsselten ersten Entschlüsselungsschlüssel VKK sind nach wie vor in dem permanenten Speicher PMEM gespeichert.

Das System kann nun im Rahmen der zweiten Verwendung auf die in der Datenbank DB gespeicherten Daten zugreifen, jedenfalls insoweit, als die Instanzen U durch das erneute Zur Verfügung stellen des Geheimnisses S dieser zweiten Verwendung zugestimmt haben.

Für eine dritte und jede weitere Verwendung der Daten werden die zuvor genannten Schritte erneut durchgeführt, also im Wesentlichen:
- Löschen des volatilen Speichers VMEM
- Entgegennehmen eines Geheimnisses S von der Instanz U
- Erzeugen entsprechender zweiter Entschlüsselungsschlüssel K2 basierend auf dem Geheimnis S
- Entschlüsseln der verschlüsselten ersten Entschlüsselungsschlüssel VKK mit dem jeweiligen zweiten Entschlüsselungsschlüssel K2 und Speichern der entschlüsselten ersten Entschlüsselungsschlüssel VK in dem volatilen Speicher VMEM.

Ferner weist das System eine Zugriffskontrolleinrichtung PGU (Policy Gate Unit) auf, über die der Zugriff auf die Daten in der Datenbank DB abgewickelt wird. Die Zugriffskontrolleinrichtung PGU legt aufgrund einer Anzahl von Zugriffsrichtlinien, die in der Zugriffskontrolleinrichtung PGU gespeichert sein können, fest, wer auf welche Art auf die Daten in der Datenbank DB zugreifen kann. Diese Zugriffsrichtlinien definieren also die Verwendung der Daten.

Ändern sich nun die Zugriffsrichtlinien, so entspricht dies einer Änderung der Verwendung der Daten.

Um nun zu erzwingen, dass die jeweiligen Instanzen U, oder zumindest einige der Instanzen U, diesen geänderten Zugriffrichtlinien und damit der sich geänderten Verwendung der Daten zustimmen, wir einerseits die Zugriffskontrolleinrichtung PGU nach einer Änderung der Zugriffrichtlinien neu gestartet. Andererseits ist die Zugriffskontrolleinrichtung PGU physikalisch, d.h. vorzugsweise fest verdrahtet, derart mit dem volatilen Speicher VMEM gekoppelt (Boot Coupling BC), dass ein Neustart der Zugriffskontrolleinrichtung PGU einen Neustart des volatilen Speichers VMEM bewirkt.

Der Neustart des volatilen Speichers VMEM kann etwa dadurch bewirkt werden, dass die Stromzufuhr des volatilen Speichers VMEM für eine gewisse Zeit unterbrochen wird. Der Inhalt des volatilen Speichers VMEM, und damit die ersten Entschlüsselungsschlüssel VK gehen dadurch verloren bzw. werden gelöscht. Etwaige Sicherungskopien des volatilen Speichers VMEM werden ebenfalls gelöscht. Nachdem Neustart des volatilen Speichers VMEM kann die Zustimmung der jeweiligen Instanz U zur weiteren Verwendung der Daten nur durch das Bereitstellen des jeweiligen Geheimnisses S erfolgen, wie vorstehend beschrieben.

Die Einheiten des in Fig. 1 gezeigten Systems können Bestandteil einer gesicherten Umgebung VI sein, die gewährleistet, dass weder der Betreiber des Systems noch ein sonstiger Dritter auf die Daten oder Schlüssel zugreifen kann. Ein Zugriff kann nur über besonders eingerichtete Schnittstellen erfolgen.

Die gesicherte Umgebung VI kann hierbei einen Netzwerkbereich, zumindest einen Verarbeitungsbereich und einen Speicherbereich umfassen, wobei der Netzwerkbereich, der Verarbeitungsbereich und der Speicherbereich physikalisch voneinander getrennt sind. Der Netzwerkbereich und der Verarbeitungsbereich sowie der Verarbeitungsbereich und der Speicherbereich können jeweils über ein internes Kommunikationsnetzwerk miteinander gekoppelt sein.

Die gesicherte Umgebung VI kann zudem eine Zugriffssteuerung aufweisen, die angepasst ist, einen Zugriff auf den Netzwerkbereich, den Verarbeitungsbereich und den Speicherbereich zu überwachen und zu steuern und einen Zugriff auf unverschlüsselte Daten zu verhindern. Die Zugriffssteuerung kann eine Zugriffssteuerungseinheit und eine Anzahl von mit der Zugriffssteuerungseinheit gekoppelte Sensor-/Aktor-Einheiten umfassen, wobei jedem Netzwerkbereich, Verarbeitungsbereich und Speicherbereich jeweils zumindest eine Sensor-/Aktor-Einheit zugeordnet ist, wobei jede Sensor-/Aktor-Einheit zumindest einen Sensor und/oder Aktor aufweist, und wobei die Zugriffssteuerungseinheit angepasst ist, die Sensor-/Aktor-Einheiten zu steuern. Der zumindest eine Sensor und/oder Aktor können ausgewählt sein aus der Gruppe zumindest umfassend Griffsteuerung, Powerswitch, Racksensor, Türsensor, und Kombinationen hiervon.

Der Netzwerkbereich kann angepasst sein, über ein Kommunikationsnetzwerk eine Kommunikation zwischen dem System VI und einem externen System (z.B. ein Client) abzuwickeln, wobei der Netzwerkbereich weiter angepasst sein kann, Daten in verschlüsselter Form zu senden und zu empfangen.

Vorteilhaft ist es, wenn der Verarbeitungsbereich angepasst ist, Daten von dem Speicherbereich und/oder von dem Netzwerkbereich zu empfangen, die empfangenen Daten zu verarbeiten und die verarbeiteten Daten an den Speicherbereich und/oder an den Netzwerkbereich zu übertragen. Die an den Netzwerkbereich zu übertragenden Daten können vorher verschlüsselt werden.

Damit ist es möglich, dass eine Big Data Analyse vollständig innerhalb der gesicherten Umgebung durchgeführt wird und nur die Ergebnisse der Analyse die gesicherte Umgebung verlassen müssen.

In dem erfindungsgemäßen System kann es vorgesehen sein, den volatilen Speicher VMEM redundant auszuführen. Hierzu werden eine oder mehrere redundante volatile Speicher VMEMr vorgesehen, die über eine gesicherte Netzwerkverbindung mit dem volatilen Speicher VMEM gekoppelt sind. Die redundanten volatilen Speicher VMEMr und der volatile Speicher VMEM können in derselben gesicherten Umgebung VI angeordnet sein. Alternativ können die redundanten volatilen Speicher VMEMr auch in einer weiteren gesicherten Umgebung VI angeordnet sein, wie in Fig. 1 gezeigt. In einer noch weiteren Alternative kann es vorgesehen, jeden der redundanten volatilen Speicher VMEMr in einer eigenen sicheren Umgebung anzuordnen.

Die redundanten volatilen Speicher VMEMr können verwendet werden, um beispielsweise nach einem Systemausfall den volatilen Speicher VMEM mit Hilfe der redundanten volatilen Speicher VMEMr wieder herstellen zu können.

Allerdings ist es vorgesehen, dass bei einem Neustart der Zugriffskontrolleinrichtung PGU nicht nur der volatile Speicher VMEM neu gestartet und die darin gespeicherten Schlüssel VK gelöscht werden, sondern auch alle redundanten volatilen Speicher VMEMr. Das heißt, dass auch alle in den redundanten volatilen Speicher VMEMr gespeicherten ersten Entschlüsselungsschlüssel VK gelöscht bzw. vernichtet werden.

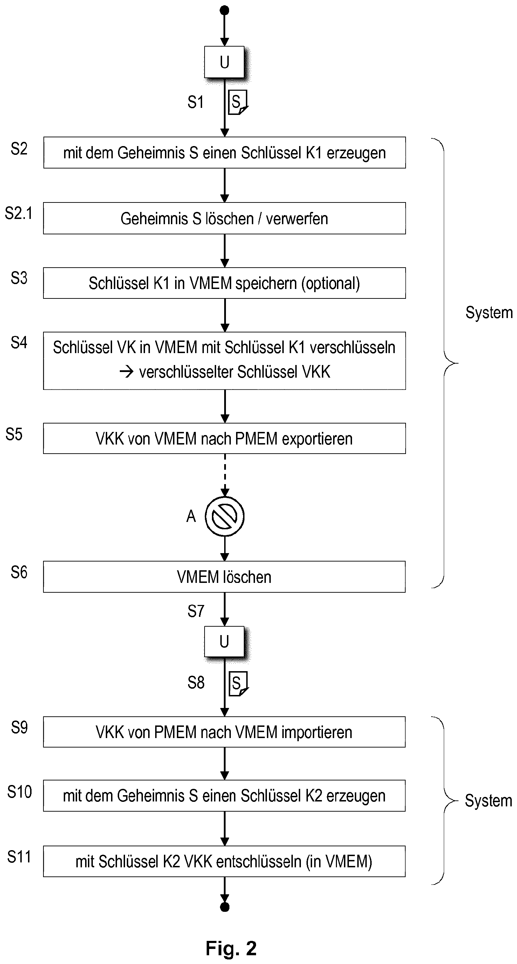

Fig. 2 zeigt ein Ablaufdiagramm für ein Beispiel eines erfindungsgemäßen Verfahrens zum gesicherten Zugriff auf Daten.

Bei dem in Fig. 2 gezeigten Ablauf des erfindungsgemäßen Verfahrens wird davon ausgegangen, dass in der Datenbank DB bereits Daten verschlüsselt gespeichert sind und die entsprechenden ersten Entschlüsselungsschlüssel VK für jede Instanz U ausschließlich in dem volatilen Speicher VMEM gespeichert sind.

In einem ersten Schritt S1 stellt die Instanz U ein Geheimnis S bereit, das dem System zur Verfügung gestellt wird bzw. an das System übertragen wird.

In einem zweiten Schritt S2 erzeugt das System unter Verwendung des Geheimnisses S einen Verschlüsselungsschlüssel K1, der zum Verschlüsseln der ersten Entschlüsselungsschlüssel VK vorgesehen sind. das Geheimnis S kann anschließend gelöscht bzw. verworfen werden (Schritt S2.1).

Optional kann der Verschlüsselungsschlüssel K1 in dem volatilen Speicher VMEM gespeichert werden (Schritt S3).

In einem weiteren Schritt S4 werden die der jeweiligen Instanz zugeordneten ersten Entschlüsselungsschlüssel VK unter Verwendung des Verschlüsselungsschlüssel K1 verschlüsselt, sodass sich verschlüsselte erste Entschlüsselungsschlüssel VKK ergeben. An dieser Stelle sei erwähnt, dass jeder Instanz mehrere erste Entschlüsselungsschlüssel VK zugeordnet sein können. So können beispielsweise in regelmäßigen Abständen (z.B. stündlich, täglich oder wöchentlich) für jede Instanz U neue Schlüssel zum Verschlüsseln der Daten in der Datenbank DB und damit neue erste Entschlüsselungsschlüssel VK erzeugt werden.

Die verschlüsselten Entschlüsselungsschlüssel VK werden anschließend in dem Schritt S5 in einen permanenten Speicher PMEM gespeichert.

Die Schritte S4 und S5 werden für jeden in dem volatilen Speicher VMEM neu erzeugten ersten Entschlüsselungsschlüssel VK durchgeführt, vorzugsweise unmittelbar nach dem Erzeugen eines neuen ersten Entschlüsselungsschlüssels VK. Das hat zum Vorteil, dass zu jedem Zeitpunkt für jeden in dem volatilen Speicher VMEM gespeicherten ersten Entschlüsselungsschlüssel VK ein entsprechender verschlüsselter erster Entschlüsselungsschlüssel VKK in dem permanenten Speicher PMEM vorhanden ist. Der volatile Speicher VMEM kann so jederzeit gelöscht werden, ohne dass erste Entschlüsselungsschlüssel VK tatsächlich verloren gehen.

Besonders vorteilhaft ist es, wenn das Erzeugen eines ersten Entschlüsselungsschlüssels VK in dem volatilen Speicher VMEM und die Schritte S4 und S5 als atomare Aktion ausgeführt werden. Atomare Aktion bedeutet hier, dass der Vorgang des Erzeugens eines ersten Entschlüsselungsschlüssels VK bis zum Schritt S5 nicht unterbrochen werden darf, um Inkonsistenzen zwischen den ersten Entschlüsselungsschlüssel VK in dem volatilen Speicher VMEM und den verschlüsselten ersten Entschlüsselungsschlüssel VKK in dem permanenten Speicher PMEM zu vermeiden.

Hierzu kann es vorgesehen sein, den im Zusammenhang mit Fig. 1 beschriebenen Neustart des volatilen Speichers VMEM solange zu verzögern, bis nach dem Erzeugen eines ersten Entschlüsselungsschlüssels VK auch die dazugehörigen Schritte S4 und S5 abgeschlossen sind. Diese Verzögerung kann etwa dadurch realisiert werden, dass eine Steuereinheit oder ein Treiber des volatilen Speichers den Neustart des volatilen Speichers solange verhindert, bis die atomare(n) Aktion(en) abgeschlossen sind.

Beim Erzeugen eines ersten Entschlüsselungsschlüssels VK kann in dem volatilen Speicher oder in einem Register der Steuereinheit ein entsprechendes Flag gesetzt werden, das erst von dem Schritt S5 wieder zurückgesetzt werden kann. Erst wenn alle Flags zurückgesetzt sind, kann der volatile Speicher VMEM neu gestartet werden. Alternativ zu den Flags kann auch ein Zähler vorgesehen sein, der beim Erzeugen eines ersten Entschlüsselungsschlüssels VK hochgezählt und vom dem Schritt S5 wieder heruntergezählt wird, sodass der volatile Speicher VMEM erst dann neu gestartet werden kann, wenn der Zähler den Wert Null bzw. seinen Urzustand aufweist. Um einen Deadlock oder eine Endlosschleife zu vermeiden, können nach dem angeforderten Neustart des volatilen Speichers VMEM keine neuen ersten Entschlüsselungsschlüssel VK mehr erzeugt werden - es können nur noch die atomaren Aktionen abgeschlossen werden.

In dem Schritt A wird die mit Bezug auf Fig. 1 beschriebene Zugriffsrichtlinie geändert, was unmittelbar zu einem Neustart der Zugriffskontrolleinrichtung PGU und damit auch zu einem Neustart des volatilen Speichers VMEM führt, wobei der volatile Speicher VMEM vorzugsweise so ausgestaltet ist, dass zuerst alle atomaren Aktionen beendet werden, bevor der volatile Speicher VMEM neu gestartet und damit alle in dem volatilen Speicher gespeicherten ersten Entschlüsselungsschlüssel VK gelöscht werden.

Der Neustart des volatilen Speichers bewirkt, dass in dem Schritt S6 der volatile Speicher VMEM gelöscht wird.

Im Anschluss an den Neustart des volatilen Speichers wird die Instanz U in dem Schritt S7 aufgefordert, dem Betreiber des Systems die Einwilligung für eine neue / weiterer Verwendung der Daten zu erteilen. Das Erteilen der Einwilligung erfolgt dadurch, dass die Instanz U in dem Schritt S8 dem System erneut das Geheimnis S mitteilt.

Nach der erneuten Mitteilung / Übermittlung des Geheimnisses S durch die Instanz U werden die der Instanz U zugeordneten verschlüsselten ersten Entschlüsselungsschlüssel VKK in dem Schritt S9 von dem permanenten Speicher PMEM in den volatilen Speicher VMEM kopiert.

Anschließend wird in dem Schritt S10 basierend auf dem erneut übermittelten Geheimnis S ein zweiter Entschlüsselungsschlüssel K2 erzeugt, mit dem im Schritt S11 die in den volatilen Speicher VMEM kopierten verschlüsselten ersten Entschlüsselungsschlüssel VKK entschlüsselt werden. Die der Instanz U zugeordneten ersten Entschlüsselungsschlüssel liegen dann in dem volatilen Speichern VMEM wieder in entschlüsselter Form vor (VK) und können für das Entschlüsseln der der Instanz U zugeordneten und in der der Daten DB gespeicherten Daten verwendet werden, und zwar für die weitere Verwendung.

Damit wird es ermöglich, dass einerseits ein Nutzer der neuen / weiteren Verwendung der Daten zustimmen muss und andererseits auch die bereits vorhanden Daten der neuen / weiteren Verwendung zugänglich sind. Ferner kann dadurch auch verhindert werden, dass die Daten einem potentiellen Missbrauch durch eine geänderte Zugriffsrichtlinie ausgesetzt werden, da bei einer Änderung der Zugriffsrichtlinie die ersten Entschlüsselungsschlüssel VK in dem volatilen Speicher VMEM automatisch gelöscht werden und das Wiederherstellen dieser Schlüssel nur mit Zustimmung der jeweiligen Instanz erfolgen kann.

Anstelle einer Änderung einer Richtlinie kann das Löschen des volatilen Speichers VMEM auch aufgrund eines Angriffes auf das System angestoßen werden. Die ersten Entschlüsselungsschlüssel VK sind auch in diesem Fall nur mit Zustimmung der jeweiligen Instanz wieder herstellbar (durch erneutes Übermitteln des Geheimnisses S).

### Bezugszeichenliste:

- BC: Boot Coupling (physikalische Kopplung zwischen dem volatilen Speicher VMEM und der Zugriffskontrolleinrichtung PGU)
- DB: Datenbank, in der die Daten (verschlüsselt) gespeichert sind
- K1: Verschlüsselungsschlüssel zum Verschlüsseln der ersten Entschlüsselungsschlüssel VK
- K2: zweiter Entschlüsselungsschlüssel zum Entschlüsseln der verschlüsselten ersten Entschlüsselungsschlüssel VKK
- PGU: Zugriffskontrolleinrichtung (Policy Gate Unit)
- PMEM: permanenter Speicher
- S: Geheimnis, z.B. Passwort, Token, etc.
- S1 - S11: Schritte des erfindungsgemäßen Verfahrens
- U: Instanz, der die Daten gehören, etwa ein User
- VI: gesicherte Umgebung
- VK: erster Entschlüsselungsschlüssel zum Entschlüsseln der Daten
- VKK: verschlüsselte erste Entschlüsselungsschlüssel VK
- VMEM: volatiler Speicher
- VMEMr: redundanter volatiler Speicher VMEM

## Patentansprüche

1. Verfahren zum gesicherten Zugriff auf Daten, wobei
- die Daten eine Anzahl von Datensätzen umfassen, wobei
- die Datensätze jeweils einer Instanz (U), vorzugweise einem Benutzer zugeordnet werden, und
- die Datensätze verschlüsselt in einer Datenbank (DB) gespeichert werden, wobei zum Entschlüsseln der der jeweiligen Instanz zugeordneten Datensätze ein der jeweiligen Instanz (U) zugeordneter erster Entschlüsselungsschlüssel (VK) verwendet wird,
- die ersten Entschlüsselungsschlüssel (VK) in einem volatilen Speicher (VMEM) gespeichert werden,
- die der jeweiligen Instanz (U) zugeordneten ersten Entschlüsselungsschlüssel (VK) mit einem der jeweiligen Instanz (U) zugeordneten Verschlüsselungsschlüssel (K1) verschlüsselt werden (S4) und die verschlüsselten ersten Entschlüsselungsschlüssel (VKK) in einem permanenten Speicher (PMEM) gespeichert werden (S5), und
- nach einem Löschen (S6) des volatilen Speichers (VMEM)
- die verschlüsselten ersten Entschlüsselungsschlüssel (VKK) von dem permanenten Speicher (PMEM) in den volatilen Speicher (VMEM) kopiert werden (S9), und
- in dem volatilen Speicher (VMEM) die ersten Entschlüsselungsschlüssel (VKK) mit einem der jeweiligen Instanz (U) zugeordneten zweiten Entschlüsselungsschlüssel (K2) entschlüsselt werden, und
- wobei der Zugriff auf die in der Datenbank (DB) verschlüsselt gespeicherten Datensätze über eine Zugriffskontrolleinrichtung (PGU) abgewickelt wird, wobei in der Zugriffskontrolleinrichtung (PGU) Zugriffsrichtlinien hinterlegt sind, die angeben, wer zu welchem Zweck auf die verschlüsselten Datensätze zugreifen kann, wobei bei einer Änderung der Zugriffsrichtlinien der gesamte Inhalt des volatilen Speichers (VMEM) gelöscht wird.

2. Verfahren nach dem vorhergehenden Anspruch, wobei die Verschlüsselungsschlüssel (K1) und die zweiten Entschlüsselungsschlüssel (K2) mit einem Geheimnis (S) erzeugt werden, das von der jeweiligen Instanz (U) bereitgestellt wird, wobei das Geheimnis (S) von der jeweiligen Instanz (U) separat für das Erzeugen der Verschlüsselungsschlüssel (K1) (S1) und für das Erzeugen der zweiten Entschlüsselungsschlüssel (K2) (S8) bereitgestellt wird.

3. Verfahren nach dem vorhergehenden Anspruch, wobei das Geheimnis (S) jeweils nach dem Erzeugen (S2) der Verschlüsselungsschlüssel (K1) und nach dem Erzeugen (S10) der zweiten Entschlüsselungsschlüssel (K2) verworfen bzw. gelöscht wird (S2.1; S10.1).

4. Verfahren nach einem der vorhergehenden Ansprüche, wobei die jeweiligen Verschlüsselungsschlüssel (K1) nach dem Verschlüsseln (S4) der ersten Entschlüsselungsschlüssel (VK) gelöscht oder ausschließlich in dem volatilen Speicher (VMEM) gespeichert werden.

5. Verfahren nach einem der vorhergehenden Ansprüche, wobei die jeweiligen zweiten Entschlüsselungsschlüssel (K2) nach dem Entschlüsseln (S11) der verschlüsselten ersten Entschlüsselungsschlüssel (VKK) gelöscht oder ausschließlich in dem volatilen Speicher (VMEM) gespeichert werden.

6. Verfahren nach einem der vorhergehenden Ansprüche, wobei die Zugriffskontrolleinrichtung (PGU) physikalisch mit dem volatilen Speicher (VMEM) gekoppelt ist, wobei bei einer Änderung der Zugriffsrichtlinien die Zugriffskontrolleinrichtung (PGU) neu gestartet wird und aufgrund der physikalischen Kopplung auch der volatile Speicher (VMEM) neu gestartet wird und die in dem volatilen Speicher (VMEM) gespeicherten ersten Entschlüsselungsschlüssel (VK) gelöscht werden.

7. System zum gesicherten Zugriff auf Daten, wobei das System zumindest
- einen volatilen Speicher (VMEM) zum Speichern von ersten Entschlüsselungsschlüssel (VK),
- einen permanenten Speicher (PMEM) zum Speichern von verschlüsselten ersten Entschlüsselungsschlüssel (VKK),
- eine Datenbank (DB), zum Speichern von verschlüsselten und mit dem ersten Entschlüsselungsschlüssel (VK) entschlüsselbarer Daten, und
- einer Zugriffskontrolleinrichtung (PGU), die angepasst ist, den Zugriff auf die Daten in der Datenbank (DB) zu überwachen und/oder zu regeln und/oder zu steuern, wobei der Zugriffskontrolleinrichtung zumindest eine Zugriffsrichtlinie zugeordnet ist, und wobei die Zugriffskontrolleinrichtung weiter angepasst ist, den volatilen Speicher (VMEM) zu löschen, sobald sich die zumindest eine Zugriffsrichtlinie ändert,
umfasst, und wobei das System angepasst ist, das Verfahren nach einem der vorhergehenden Ansprüche auszuführen.

## Claims

1. Method for accessing data in a secure manner, wherein
- the data comprise a number of data sets, wherein
- each of the data sets is assigned to an entity (U), preferably a user, and
- the data sets are stored in encrypted form in a database (DB), wherein a first decryption key (VK) assigned to a particular entity (U) is used to decrypt the data sets assigned to the particular entity,
- the first decryption keys (VK) are stored in a volatile memory (VMEM),
- the first decryption keys (VK) assigned to the particular entity (U) are encrypted by an encryption key (K1) assigned to the particular entity (U) (S4), and the encrypted first decryption keys (VKK) are stored in a permanent memory (PMEM) (S5), and
- after the volatile memory (VMEM) is erased (S6)
- the encrypted first decryption keys (VKK) are copied from the permanent memory (PMEM) into the volatile memory (VMEM) (S9), and
- in the volatile memory (VMEM), the first decryption keys (VKK) are decrypted by a second decryption key (K2) assigned to the particular entity (U), and
- wherein the access to the data sets stored in encrypted form in the database (DB) is handled by an access control device (PGU), wherein access policies indicating who can access the encrypted data sets and for what purpose are stored in the access control device (PGU), wherein, in the event of a change to the access policies, the entire content of the volatile memory (VMEM) is erased.

2. Method according to the preceding claim, wherein the encryption keys (K1) and the second decryption keys (K2) are generated by means of a secret (S) provided by the particular entity (U), wherein the secret (S) is provided by the particular entity (U) separately for the generation of the encryption keys (K1) (S1) and for the generation of the second decryption keys (K2) (S8).

3. Method according to the preceding claim, wherein the secret (S) is discarded or erased in each case after the generation (S2) of the encryption keys (K1) and the generation (S10) of the second decryption keys (K2) (S2.1; S10.1).

4. Method according to any of the preceding claims, wherein each of the encryption keys (K1) is erased or stored only in the volatile memory (VMEM) after the encryption (S4) of the first decryption keys (VK).

5. Method according to any of the preceding claims, wherein each of the second decryption keys (K2) is erased or stored only in the volatile memory (VMEM) after the decryption (S11) of the encrypted first decryption keys (VKK).

6. Method according to any of the preceding claims, wherein the access control device (PGU) is physically coupled to the volatile memory (VMEM), wherein, in the event of a change to the access policies, the access control device (PGU) is restarted and the volatile memory (VMEM) is also restarted on account of the physical coupling, and the first decryption keys (VK) stored in the volatile memory (VMEM) are erased.

7. System for accessing data in a secure manner, wherein the system comprises at least
- a volatile memory (VMEM) for storing first decryption keys (VK),
- a permanent memory (PMEM) for storing encrypted first decryption keys (VKK),
- a database (DB) for storing encrypted data that can be decrypted by the first decryption key (VK), and
- an access control device (PGU) which is adapted to monitor and/or regulate and/or control access to the data in the database (DB), wherein at least one access policy is assigned to the access control device, and wherein the access control device is further adapted to erase the volatile memory (VMEM) as soon as the at least one access policy is changed,
and wherein the system is adapted to carry out the method according to any of the preceding claims.

## Revendications

1. Procédé permettant un accès sécurisé à des données, dans lequel
- les données comprennent un certain nombre d'enregistrements,
- les enregistrements étant respectivement attribués à une instance (U), de préférence à un utilisateur, et
- les enregistrements étant stockés codés dans une base de données (DB), une première clé de décodage (VK) attribuée à l'instance (U) respective étant utilisée pour décoder les enregistrements attribués à l'instance respective,
- les premières clés de décodage (VK) sont stockées dans une mémoire volatile (VMEM),
- les premières clés de décodage (VK) attribuées à l'instance (U) respective sont codées (S4) avec une clé de codage (K1) attribuée à l'instance (U) respective et les premières clés de décodage (VKK) codées sont stockées dans une mémoire permanente (PMEM) (S5), et,
- après effacement (S6) de la mémoire volatile (VMEM),
- les premières clés de décodage (VKK) codées sont copiées de la mémoire permanente (PMEM) vers la mémoire volatile (VMEM) (S9), et
- les premières clés de décodage (VKK) sont décodées dans la mémoire volatile (VMEM) avec une seconde clé de décodage (K2) attribuée à l'instance (U) respective, et
- l'accès aux enregistrements stockés codés dans la base de données (DB) étant géré par l'intermédiaire d'un dispositif de contrôle d'accès (PGU), des directives d'accès étant consignées dans le dispositif de contrôle d'accès (PGU), lesquelles indiquent qui peut accéder aux enregistrements codés et dans quel but, une modification des directives d'accès supprimant tout le contenu de la mémoire volatile (VMEM).

2. Procédé selon la revendication précédente, dans lequel la clé de codage (K1) et la seconde clé de décodage (K2) sont générées avec un secret (S) qui est fourni par l'instance (U) respective, le secret (S) de l'instance (U) respective étant fourni séparément pour la génération de la clé de codage (K1) (S1) et pour la génération de la seconde clé de décodage (K2) (S8).

3. Procédé selon la revendication précédente, dans lequel le secret (S) est rejeté ou bien supprimé (S2.1; S10.1) respectivement après la génération (S2) de la clé de codage (K1) et après la génération (S10) de la seconde clé de décodage (K2).

4. Procédé selon l'une des revendications précédentes, dans lequel les clés de codage (K1) respectives sont supprimées après le codage (S4) de la première clé de décodage (VK) ou sont stockées exclusivement dans la mémoire volatile (VMEM).

5. Procédé selon l'une des revendications précédentes, dans lequel les secondes clés de décodage (K2) respectives sont supprimées après le décodage (S11) de la première clé de décodage (VKK) codée ou sont stockées exclusivement dans la mémoire volatile (VMEM).

6. Procédé selon l'une des revendications précédentes, dans lequel le dispositif de contrôle d'accès (PGU) est accouplé physiquement à la mémoire volatile (VMEM), le dispositif de contrôle d'accès (PGU) étant redémarré lorsque les directives d'accès sont modifiées et, en raison de l'accouplement physique, la mémoire volatile (VMEM) est également redémarrée et les premières clés de décodage (VK) stockées dans la mémoire volatile (VMEM) sont supprimées.

7. Système permettant un accès sécurisé à des données, le système comprenant au moins
- une mémoire volatile (VMEM) permettant le stockage de premières clés de décodage (VK),
- une mémoire permanente (PMEM) permettant le stockage de premières clés de décodage (VKK) codées,
- une base de données (DB) permettant le stockage de données codées qui peuvent être décodées avec la première clé de décodage (VK), et
- un dispositif de contrôle d'accès (PGU) qui est adapté pour surveiller et/ou réguler et/ou commander l'accès aux données dans la base de données (DB), au moins une directive d'accès étant attribuée au dispositif de contrôle d'accès, et le dispositif de contrôle d'accès étant en outre adapté pour supprimer la mémoire volatile (VMEM) dès que l'au moins une directive d'accès est modifiée,
et le système étant adapté pour exécuter le procédé selon l'une des revendications précédentes.
